(19) **Europäisches Patentamt / European Patent Office / Office européen des brevets**

(11) **EP 1 910 848 B1**

(12) **EUROPEAN PATENT SPECIFICATION**

(45) Date of publication and mention
of the grant of the patent:
**18.01.2012   Bulletin 2012/03**

(51) Int Cl.:
*G01P 3/64* (2006.01)  *G01P 3/66* (2006.01)
*G08G 1/042* (2006.01)  *G08G 1/02* (2006.01)
*G08G 1/052* (2006.01)

(21) Application number: **05768159.5**

(22) Date of filing: **01.08.2005**

(86) International application number:
**PCT/EP2005/008313**

(87) International publication number:
**WO 2007/014573 (08.02.2007 Gazette 2007/06)**

(54) **METHOD AND SYSTEM FOR SENSING THE VELOCITY OF MOVING OBJECTS**

VERFAHREN UND SYSTEM ZUM ERFASSEN DER GESCHWINDIGKEIT BEWEGLICHER OBJEKTE

PROCEDE ET SYSTEME DE DETECTION DE LA VITESSE D'UN OBJET EN MOUVEMENT

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**16.04.2008   Bulletin 2008/16**

(73) Proprietor: **Pirelli & C. S.p.A.**
**20126 Milano (IT)**

(72) Inventors:
  • **TEBANO, Riccardo**
    **I-20126 Milano (IT)**
  • **SERRA, Stefano**
    **I-20126 Milano (IT)**

  • **MARTINOTTO, Luca**
    **I-20126 Milano (IT)**
  • **FARINA, Germano**
    **I-20126 Milano (IT)**
  • **BAGLIVO, Giorgio**
    **I-20126 Milano (IT)**
  • **MOZZATI, Marco**
    **I-20126 Milano (IT)**

(74) Representative: **Tirloni, Bartolomeo**
**Bugnion S.p.A.**
**Via Dante, 17**
**25122 Brescia (IT)**

(56) References cited:
**US-A- 5 331 276     US-B1- 6 208 268**

## Description

### Field of the invention

The present invention generally relates to methods and systems for measuring the velocity of moving objects, for example to the field of measuring the speed of vehicles on a road.

### Background of the invention

Traffic parameters like average speed, density, and flux have to be accurately known in order to perform traffic monitoring and management. The real time knowledge of the number and the speed of the vehicles passing by many key positions in a road network would allow a reliable computing of such traffic parameters and an effective dynamic traffic management. Throughout the present description, the term 'velocity' will refer to the velocity vector, while the term 'speed' will refer to the modulus of the velocity vector, i.e. the scalar velocity of a moving object.

Vehicle speed measuring devices are known which are based on a pair of magnetic sensors installed at a prescribed distance in a longitudinal direction. The two digital signals generated by the sensors when the vehicle passes are compared to obtain the time delay and the speed of the vehicle is computed from the time delay and the sensor distance.

International patent application WO2004/034065 entitled "Speed sensing method and apparatus" discloses a method and apparatus for measuring the speed of a target object passing a pair of sensor units displaced apart by a predetermined distance L in the direction of motion of the target object. A signal processor is configured to determine a cross-correlation function between signals generated by the first and the second sensor units and an associated time delay (which is determined by finding the maximum value of the cross-correlation function). The speed is calculated as the ratio of the distance L to the time delay. US5331276 discloses a velocity measuring system which includes two magnetometers separated by a known distance and oriented precisely with respect to the path of travel of a ferrous vehicle whose velocity is to be determined. An indication of the velocity of the vehicle is obtained from the ratio of the time derivative of the magnitude of the vehicle's magnetic induction to the negative of the spatial derivative of this same quantity. US6208268 discloses a detection system for determining vehicle presence, vehicle speed and vehicle length. First and second sensors are separated from one another by a known distance in a direction substantially aligned with a direction of traffic flow. Vehicle speed is determined by a time-distance relationship using the leading and trailing edge magnetic signatures and the known distance.

The Applicant has noted that in order to reach a suitable level of accuracy of speed evaluation using prior art devices based on the signal time delay, either the sampling rate of the sensor signals needs to be high (e.g., greater then or equal to several KHz) or the sensor spacing has to be large (e.g., greater then or equal to several tens of cm) or both. High sampling rate is detrimental in that it increases the power consumption of the speed measurement system, which is especially important in case the devices rely on battery power supply ('stand-alone devices'). It also requires large memory and/or computational resources in order to store and/or process the data, thus contributing to the high power consumption. Moreover, it increases the cost, the complexity and the reliability of the measuring system. On the other end, a large distance among the two sensors causes an increase in the size of the device comprising the sensors, which is particularly important when the device is to be buried, e.g. under the asphalt or cement of a road.

The Applicant has also noted that prior art devices based on a cross correlation function need hard computational work, and thus large computational hardware, in order to perform the mathematics involved. This problem is particularly important in case of stand-alone velocity measuring systems, in that it not only requires large power consumption, but also prevents from manufacturing miniaturized and low cost measuring systems.

The Applicant has found that there is a need for methods and systems for measuring the velocity of moving objects which are accurate, compact and have low power consumption. Preferably, the above systems should be suitable to work in a stand-alone configuration. It is also desired that the velocity measuring systems be fast, miniaturized, do not require large memory and/or computational resources, have low sampling rate and long lifetime also in case of battery power supply. In addition, the velocity measuring systems should preferably be low-cost, reliable and apt to high volume and/or high yield manufacturability.

### Summary of the invention

The Applicant has found a method and a system for measuring the velocity of moving objects which can solve one or more of the problems stated above. The solution of the present invention is simple, low cost and high yield.

The Applicant believes that the present invention solves the above problem of measuring the velocity accurately and with low power consumption and small overall dimensions being based on the evaluation of the velocity of an object as a function of at least a spatial derivative and at least a time derivative of a physical quantity, wherein the spatial derivative and the time derivative are approximately evaluated from at least two measurement signals acquired respectively by at least two sensors spaced apart by a given distance. The at least two measurement signals are in the form of a time series of data representative of the physical quantity, wherein the data in the time series are acquired with a given sampling time step $\tau$.

It is believed that the method and system of the present invention can be applied to the determination of the velocity of any traveling object provided that there exists at least a physical quantity which is subject to a change in correspondence to the passage of the object and which could be sensed by means of suitable sensors placed near the object trajectory. For the invention to be implemented, at least two distinct sensors are needed. They are advantageously of the same kind, i.e., they are apt to measure the same physical quantity(ies). They are preferably fixed in the frame of reference with respect to which the object velocity has to be known.

An exemplary application of the present method is the speed measurement of magnetically permeable masses passing near a couple of magneto-resistive sensors, which are placed at a known distance with respect to one another and along the direction the object is expected to travel. The speed is computed as a function of the difference between the data from the time series profiles of the first sensor and the second sensor at the same instant of time (space difference, which approximate the space derivative when divided by the known sensor distance), and the time difference in the time series profile of one of the two sensors at the same instant of time (which approximate the time derivative when divided by the sampling time step $\tau$).

The Applicant has found that the system and method described above may be advantageously applied to a method and system for measuring the speed of a vehicle along a roadway.

Several algorithms for velocity evaluation will be presented in the following as exemplary embodiments of the present invention. Remarkable reduction of the energy consumption and of the overall dimensions of the systems for sensing the velocity with respect to known systems is possible by implementation of such algorithms.

The Applicant has also found that the systems and methods described above may be advantageously be used in a system for traffic monitoring.

According to the present invention, a method for measuring the velocity of a moving object as set forth in claim 1 is provided. The method comprises acquiring at least two measurement signals via respectively at least two sensors spaced apart by a known distance, each of said at least two measurement signals being representative of a physical quantity which is measurable by the respective sensor and which is subject to a change in correspondence to a passage of the moving object near the respective sensor; calculating at least one time derivative and at least one spatial derivative of said physical quantity from the at least two measurement signals; and calculating the velocity of the moving object as a function of said at least one time derivative and said at least one spatial derivative of said physical quantity.

Preferably, the velocity is calculated by inversion of the equation $\dfrac{\overline{\partial \mathbf{P}}}{\partial t} = \dfrac{\overline{\overline{\partial \mathbf{P}}}}{\partial \mathbf{x}} \cdot \overline{\mathbf{v}}$, wherein $\overline{\mathbf{P}}$ is the physical quantity, $\dfrac{\partial \mathbf{P}}{\partial t}$ includes said at least one time derivative, $\dfrac{\overline{\overline{\partial \mathbf{P}}}}{\partial \mathbf{x}}$ is the spatial gradient of the physical quantity $\overline{\mathbf{P}}$, including said at least one spatial derivative and $\overline{\mathbf{v}}$ is a vector representing the velocity. The Applicant has found that the use of the equation above gives the advantage of very low computational resources requirements.

Advantageously, the at least two sensors lie along a direction substantially parallel to the velocity. This is advantageous in that the method further reduces its complexity and power consumption. More advantageously, the at least one time derivative is the time derivative of one component of the physical quantity and the at least one spatial derivative is the spatial derivative of said one component of the physical quantity along said direction and the velocity is obtained as the ratio of said time derivative and said spatial derivative.

Each of the at least two measurement signals is a discrete time series of data representative of the physical quantity and has a sampling time step.

In the step of calculating the at least one time derivative and the at least one spatial derivative, the at least one time derivative is approximated by the ratio of the difference between two consecutive data of the discrete time series of data of one of the two sensors and the time step; and the at least one spatial derivative is approximated by the ratio of the difference of two substantially contemporary data taken from the two discrete time series of data of the at least two sensors and the known distance.

The least one time derivative is obtained by a spatial averaging of a time variation and the at least one spatial derivative is obtained by a time averaging of a spatial variation.

Advantageously, the at least two sensors are identical sensors. Preferably, the at least two sensors are magnetic sensors and the physical quantity is at least a component of a magnetic field.

According to one embodiment, the calculation of the at least one spatial derivative uses a pair of quasi-contemporarily measurements taken by each of the at least two sensors, the first measurement of said pair of measurements being characterized by a gain of the respective sensor substantially equal and opposite to the gain of the said respective sensor associated to the second measurement of said pair of measurements.

According to another embodiment, the calculation of the at least one spatial derivative uses baseline signals of the respective at least two sensors measured in absence of the moving object.

According to another aspect of the present invention, a method for monitoring road traffic comprising a method for measuring the velocity of a vehicle according to the methods above, wherein the moving object is the vehicle, is provided (as set forth in the appended claim 12).

According to another aspect of the present invention, a system for measuring the velocity of a moving obj ect, the system comprising a sensing device comprising at least two sensors spaced apart by a known distance and each sensitive to a physical quantity subject to a change in correspondence to a passage of the moving object, a processing unit and a connection operatively connecting said sensing device and said processing unit, wherein the sensing device is configured for acquiring two measurement signals respectively from the at least two sensors, each of said two measurement signals being representative of the physical quantity and being associated to said passage of the moving object near the respective sensor; and the processing unit is configured for calculating at least one time derivative and at least one spatial derivative of said physical quantity from the at least two measurement signals and for calculating the velocity of the moving object as a function of said at least one time derivative and said at least one spatial derivative of said physical quantity.

Preferably, the processing unit is configured for calculating the velocity by inversion of the equation $\overline{\dfrac{\partial \mathbf{P}}{\partial t}} = \overline{\dfrac{\partial \mathbf{P}}{\partial \mathbf{x}}} \cdot \overline{\mathbf{v}}$, wherein $\overline{\mathbf{P}}$ is the physical quantity, $\overline{\dfrac{\partial \mathbf{P}}{\partial t}}$ includes said at least one time derivative, $\overline{\dfrac{\partial \mathbf{P}}{\partial \mathbf{x}}}$ is the spatial gradient of the physical quantity $\overline{\mathbf{P}}$, including said at least one spatial derivative and $\overline{\mathbf{v}}$ is a vector representing the velocity.

Advantageously, the at least two sensors lie along a direction substantially parallel to the velocity. In this case, the at least one time derivative is preferably the time derivative of one component of the physical quantity and the at least one spatial derivative is preferably the spatial derivative of said one component of the physical quantity along said direction and the velocity is obtained as the ratio of said time derivative and said spatial derivative.

Each of the at least two measurement signals is a discrete time series of data representative of the physical quantity and has a sampling time step.

The processing unit is configured so that the at least one time derivative is approximated by the ratio of the difference between two consecutive data of the discrete time series of data of one of the two sensors and the time step; and the at least one spatial derivative is approximated by the ratio of the difference of two substantially contemporary data taken from the two discrete time series of data of the at least two sensors and the known distance.

The at least one time derivative is a spatial averaging of a time variation and the at least one spatial derivative is a time averaging of a spatial variation.

The at least two sensors are preferably magnetic sensors and the physical quantity is preferably at least a component of a magnetic field.

According to another aspect of the present invention, a traffic monitoring system including the system above is provided, as set forth in the appended claim 19.

### Brief description of the drawings

Additional features and advantages of the present invention will be made clear by the following detailed description of embodiments thereof, provided merely by way of non-limitative examples, description that will refer to the annexed drawings, wherein:

Figure 1 is a schematic diagram showing in terms of functional blocks a traffic monitoring system including an exemplary system for sensing the velocity of a moving object according to the present invention;
Figures 2, 3 and 4 schematically show in terms of functional blocks exemplary sensing devices according to the present invention;
Figures 5 shows experimental curves of the response of a magnetic sensor;
Figure 6a and b show calculated results of a possible embodiment of the present invention; and
Figure 7a and b show calculated results of an alternative possible embodiment of the present invention.

### Detailed description of the preferred embodiment(s) of the invention

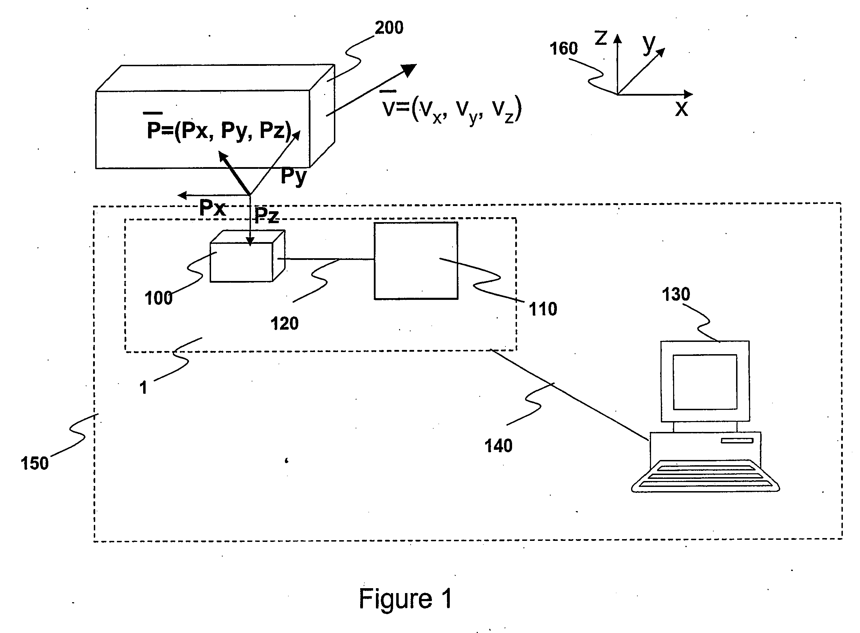

Figure 1 shows, in terms of functional blocks, a system 1 for measuring the velocity $\overline{\mathbf{v}}$ of a moving object 200 according to the present invention.

The system 1 includes a sensing device **100** and a processing unit **110** operatively connected to the sensing device via a connection **120.** The sensing device **100** and the processing unit **110** device may or may not be physically separated, so that the connection **120** may also collapse in the preferred case wherein the sensing device **100** and the processing unit **110** are integrated.

A traffic monitoring system **150** based on the present invention may comprise the velocity measuring system **1,** a base unit **130** and a communication link **140** between the velocity measuring system and the base unit. In an embodiment, the system 1 and the base unit **130** are located at a certain distance and the communication link **140** is a radio link apt to transmit the velocity measurement data from the velocity measuring system to the base unit for traffic analysis, monitoring and, possibly, management.

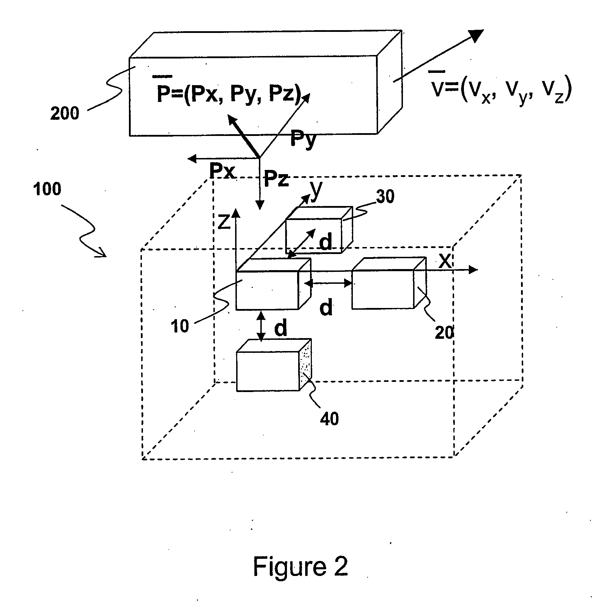

According to the present invention, as shown in the following **Figures 2, 3** and **4**, the sensing device **100** comprises at least a pair of sensors **10, 20** spaced apart by a known distance $d$, each sensor being sensitive to a physical quantity $\overline{P}$. A sensor which is sensitive to at least a component of a physical quantity will be referred to, for the purpose of the present invention, as 'sensitive to the physical quantity'. Each sensor **10, 20** is apt to provide a measurement signal representative of, or associated to, the sensed physical quantity component. The measurement signal is in the form of a discrete time series of data representative of the physical quantity and, preferably, it is characterized by a sampling rate $f$ which is related to a sampling time step $\tau = 1/f$. Typically, each sensor outputs an analogical signal which is digitized, or sampled, by an analog-to-digital-converter (ADC- not shown).

With reference again to **Figure 1** (not to scale), a moving object 200 is moving, with respect to an (x, y, z) frame of reference **160**, at a point $\overline{x}$ in space and point t in time with a velocity $\overline{v} = (v_x, v_y, v_z)$. It is assumed that a physical quantity $\overline{P} = (P_x(\overline{x}), P_y(\overline{x}), P_z(\overline{x}))$, e.g., a magnetic or electric field, at the same point $\overline{x}$ changes in time as a consequence of the passage of the moving object **200** in the point $\overline{x}$. In the present description, any object, such as the moving object **200**, able to modify the physical quantity $\overline{P}$ will be referred to as a 'source of variation' of the physical quantity $\overline{P}$. The same terminology is used for actual sources of the field $\overline{P}$.

The Applicant has noted that the time derivative of such physical quantity at the instant t and point $\overline{x}$ is related to the spatial variation of such quantity at the instant t and point x and to the object velocity $\overline{v}$ according to the following general expression:

$$\frac{\overline{\partial P}}{\partial t} = \frac{\overline{\overline{\partial P}}}{\partial x} \cdot \overline{v} \qquad \textbf{(Eq. 1)},$$

wherein

$$\frac{\overline{\overline{\partial P}}}{\partial x} \equiv \begin{pmatrix} \dfrac{\partial P_x}{\partial x} & \dfrac{\partial P_x}{\partial y} & \dfrac{\partial P_x}{\partial z} \\[2mm] \dfrac{\partial P_y}{\partial x} & \dfrac{\partial P_y}{\partial y} & \dfrac{\partial P_y}{\partial z} \\[2mm] \dfrac{\partial P_z}{\partial x} & \dfrac{\partial P_z}{\partial y} & \dfrac{\partial P_z}{\partial z} \end{pmatrix} \equiv \begin{pmatrix} \overline{\nabla P_x} \\[2mm] \overline{\nabla P_y} \\[2mm] \overline{\nabla P_z} \end{pmatrix}$$

is the 'spatial gradient' of the quantity $\overline{P}$, i.e., the matrix of the spatial gradients of the physical quantity components (each gradient defines a row) and $\dfrac{\overline{\partial P}}{\partial t}$ is the vector representing the complete time derivative of the quantity $\overline{P}$.

**Eq. 1** above holds in the typical case wherein the object speed is small in comparison with the speed of light (as is the case for vehicles traveling along a roadway).

The equations above assume a vector quantity $\overline{P}$. In case the physical quantity to be measured by the sensors is scalar, e.g. a pressure field, $\phi = \phi(\overline{x})$ , **Eq.1** takes the following particular expression: $\dfrac{\partial \phi}{\partial t} = \overline{\nabla \phi} \cdot \overline{v}$

**Eq. 1** can be explicitly written in the following form:

$$\begin{pmatrix} \dfrac{\partial P_x}{\partial t} \\[2mm] \dfrac{\partial P_y}{\partial t} \\[2mm] \dfrac{\partial P_z}{\partial t} \end{pmatrix} = \begin{pmatrix} \dfrac{\partial P_x}{\partial x} v_x + \dfrac{\partial P_x}{\partial y} v_y + \dfrac{\partial P_x}{\partial z} v_z \\[2mm] \dfrac{\partial P_y}{\partial x} v_x + \dfrac{\partial P_y}{\partial y} v_y + \dfrac{\partial P_y}{\partial z} v_z \\[2mm] \dfrac{\partial P_z}{\partial x} v_x + \dfrac{\partial P_z}{\partial y} v_y + \dfrac{\partial P_z}{\partial z} v_z \end{pmatrix} \qquad \textbf{(Eq. 2)}$$

The Applicant has found that the velocity of the object can be obtained, in principle, by inversion of **Eq. 1**:

$$\overline{v} = \overline{\dfrac{\partial \mathbf{P}}{\partial \mathbf{x}}}^{-1} \cdot \overline{\dfrac{\partial \mathbf{P}}{\partial t}} \qquad \textbf{(Eq. 3)},$$

wherein $\overline{\dfrac{\partial \mathbf{P}}{\partial \mathbf{x}}}^{-1}$ is the inverse matrix of the matrix $\overline{\dfrac{\partial \mathbf{P}}{\partial \mathbf{x}}}$ .

According to the present invention, the at least one time derivative and the at least one spatial derivative which need to be known in order to calculate the velocity in **Eq. 3**, are evaluated, at least approximately as described below, by using the two measurement signals provided respectively by the at least two sensors **10, 20**.

**Eq. 3** can be explicitly written (by solution of the system of **Eq. 2**) as:

$$\begin{pmatrix} v_x \\ v_y \\ v_z \end{pmatrix} = -\dfrac{1}{\det \overline{\dfrac{\partial \mathbf{P}}{\partial \mathbf{x}}}} \begin{pmatrix} \left( \dfrac{\partial P_y}{\partial y}\dfrac{\partial P_z}{\partial z} - \dfrac{\partial P_y}{\partial z}\dfrac{\partial P_z}{\partial y} \right)\dfrac{\partial P_x}{\partial t} + \left( \dfrac{\partial P_y}{\partial z}\dfrac{\partial P_z}{\partial x} - \dfrac{\partial P_y}{\partial x}\dfrac{\partial P_z}{\partial z} \right)\dfrac{\partial P_y}{\partial t} + \left( \dfrac{\partial P_y}{\partial x}\dfrac{\partial P_z}{\partial y} - \dfrac{\partial P_y}{\partial y}\dfrac{\partial P_z}{\partial x} \right)\dfrac{\partial P_z}{\partial t} \\[3mm] \left( \dfrac{\partial P_x}{\partial z}\dfrac{\partial P_z}{\partial y} - \dfrac{\partial P_x}{\partial y}\dfrac{\partial P_z}{\partial z} \right)\dfrac{\partial P_x}{\partial t} + \left( \dfrac{\partial P_x}{\partial x}\dfrac{\partial P_z}{\partial z} - \dfrac{\partial P_x}{\partial z}\dfrac{\partial P_z}{\partial x} \right)\dfrac{\partial P_y}{\partial t} + \left( \dfrac{\partial P_x}{\partial y}\dfrac{\partial P_z}{\partial x} - \dfrac{\partial P_x}{\partial x}\dfrac{\partial P_z}{\partial y} \right)\dfrac{\partial P_z}{\partial t} \\[3mm] \left( \dfrac{\partial P_x}{\partial y}\dfrac{\partial P_y}{\partial z} - \dfrac{\partial P_x}{\partial z}\dfrac{\partial P_y}{\partial y} \right)\dfrac{\partial P_x}{\partial t} + \left( \dfrac{\partial P_x}{\partial z}\dfrac{\partial P_y}{\partial x} - \dfrac{\partial P_x}{\partial x}\dfrac{\partial P_y}{\partial z} \right)\dfrac{\partial P_y}{\partial t} + \left( \dfrac{\partial P_x}{\partial x}\dfrac{\partial P_y}{\partial y} - \dfrac{\partial P_x}{\partial y}\dfrac{\partial P_y}{\partial x} \right)\dfrac{\partial P_z}{\partial t} \end{pmatrix}$$

$$\textbf{(Eq. 4)},$$

wherein $\det \overline{\dfrac{\partial \mathbf{P}}{\partial \mathbf{x}}}$ is the determinant of the matrix $\overline{\dfrac{\partial \mathbf{P}}{\partial \mathbf{x}}}$ .

**Eq.4** shows that if all the three spatial derivatives (i.e. the spatial gradient) and the time derivative of all the three components of the physical quantity $\overline{\mathbf{P}}$ are known, it is possible to determine all the three components of the velocity of the object.

Accordingly, in one possible embodiment of the present invention, as shown in **Fig. 2,** the sensor device **100** comprises at least four sensors **10, 20, 30** and **40**, each one sensitive to all the three components of the physical quantity $\overline{\mathbf{P}}$ (hereinafter referred to as 'tri-axial' sensors) and which are advantageously used to evaluate the three time derivatives and the nine spatial derivatives of **Eq. 4**, as exemplarily explained further below. For the purpose of the present invention, the expressions 'calculating a time or a spatial derivative' and 'evaluating a time or a spatial derivative' are used to indicate an evaluation of the derivative(s) subject to an approximation error, which is typically related to a finite incremental step (either spatial or temporal) used to evaluate the derivative(s) in discrete form. More details on this can be found further below, in correspondence to **Eq. 9** and **10**.

The at least four sensors **10, 20, 30** and **40** are preferably of the same kind, i.e. apt to measure the same physical quantities. Preferably, the sensors are identical.

They may be advantageously placed at known given distances with respect to one another. They are typically fixed in the frame of reference with respect to which the object velocity is measured. The at least four sensors **10, 20, 30** and **40** shall not lie in the same plane. They may be placed along a Cartesian set of three axes at a fixed reciprocal distance *d* as shown in **Fig. 2**. Preferably, in order to reduce the noise, they may be placed at the four vertexes of a tetrahedron (not shown), the nine spatial derivatives and three time derivatives of **Eq. 4** being in this case evaluated by suitable combination (weighted averaging) of the derivatives calculated from the signals of the sensors.

In one embodiment of the present invention, the velocity of the object to be measured may only have two components, i.e., it may lie substantially only on a fixed plane. The case of a vehicle traveling along a multi-lane road is an example of a velocity expected to lie in a plane.

For example, by suitable choice of the reference frame, it is assumed that the velocity has only the x and y components, i.e., $\bar{v} = (v_x, v_y, 0)$. **Eq. 2** then becomes:

$$\begin{pmatrix} \dfrac{\partial P_x}{\partial t} \\ \dfrac{\partial P_y}{\partial t} \\ \dfrac{\partial P_z}{\partial t} \end{pmatrix} = \begin{pmatrix} \dfrac{\partial P_x}{\partial x} v_x + \dfrac{\partial P_x}{\partial y} v_y \\ \dfrac{\partial P_y}{\partial x} v_x + \dfrac{\partial P_y}{\partial y} v_y \\ \dfrac{\partial P_z}{\partial x} v_x + \dfrac{\partial P_z}{\partial y} v_y \end{pmatrix} \qquad \textbf{(Eq. 5)}$$

Choosing for example the x and y components of the quantity $\overline{\mathbf{P}}$ (similar expressions would result by choosing x and z components or y and z components of the quantity $\overline{\mathbf{P}}$) the velocity may be calculated according to the following:

$$\begin{pmatrix} v_x \\ v_y \end{pmatrix} = \frac{1}{\dfrac{\partial P_x}{\partial x}\dfrac{\partial P_y}{\partial y} - \dfrac{\partial P_x}{\partial y}\dfrac{\partial P_y}{\partial x}} \begin{pmatrix} \dfrac{\partial P_y}{\partial y}\dfrac{\partial P_x}{\partial t} - \dfrac{\partial P_x}{\partial y}\dfrac{\partial P_y}{\partial t} \\ -\dfrac{\partial P_y}{\partial x}\dfrac{\partial P_x}{\partial t} + \dfrac{\partial P_x}{\partial x}\dfrac{\partial P_y}{\partial t} \end{pmatrix} \qquad \textbf{(Eq. 6)}$$

**Eq. 6** and the discussion above show that if the object velocity is expected to lie in a fixed plane, it is possible to determine the two components of the velocity by knowing the spatial derivatives with respect to the two directions belonging to said plane and the time derivative of only two (which may be chosen) of the three components of the physical quantity $\overline{\mathbf{P}}$.

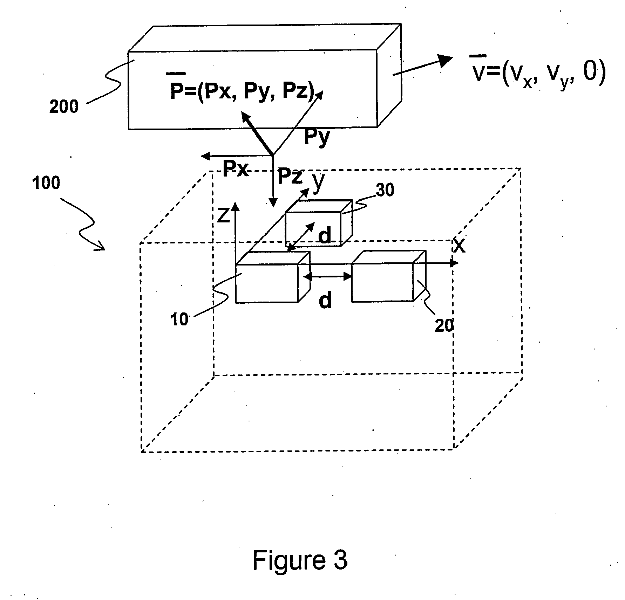

In this case, as shown in **Figure 3**, the sensing device **100** may comprise at least three sensors **10, 20** and **30**, each one sensitive to at least two components of the physical quantity $\overline{\mathbf{P}}$ (hereinafter referred to as 'bi-axial' sensors) and which are used to evaluate the three time derivatives and the six spatial derivatives of **Eq. 6**.

The at least three sensors **10, 20** and **30** shall lie on a plane which is parallel to the plane comprising the velocity vector and shall not lie along the same line. They may be placed at fixed reciprocal distances at the vertexes of a rectangular triangle as shown in **Fig. 3**. They may preferably be placed at the vertexes of a non-rectangular triangle in order to reduce noise, the four spatial derivatives and two time derivatives of **Eq. 6** being in this case evaluated by suitable combination (weighted averaging) of the derivatives calculated from the signals of the sensors.

It is possible to add redundancy to the measuring system 1 including the sensing device **100** of **Figure 3** by using at least three sensors **10, 20** and **30,** which are tri-axial. In this case, it is possible to derive the two velocity components $v_x$ and $v_y$ using two different formulas: **Eq. 6** and one of the two other similar expressions which result by choosing, respectively, x and z components and y and z components of the quantity $\overline{\mathbf{P}}$. The two results for each velocity component may then be averaged.

In one embodiment of the present invention, the velocity of the object to be measured may only have one component, i.e., it may lie substantially only along a fixed direction. The case of a car traveling along a single lane road is a good example of a velocity expected to lie along the line of the lane.

Assuming for example the velocity having only the x component, i.e., $\overline{v} = (v_x, 0, 0)$ **Eq. 2** becomes:

$$\begin{pmatrix} \dfrac{\partial P_x}{\partial t} \\[2ex] \dfrac{\partial P_y}{\partial t} \\[2ex] \dfrac{\partial P_z}{\partial t} \end{pmatrix} = \begin{pmatrix} \dfrac{\partial P_x}{\partial x} v_x \\[2ex] \dfrac{\partial P_y}{\partial x} v_x \\[2ex] \dfrac{\partial P_z}{\partial x} v_x \end{pmatrix} \qquad \textbf{(Eq. 7)}$$

Choosing for example the x component of the quantity $\overline{\mathbf{P}}$ (similar expressions would result by choosing the y component or the z component of the quantity $\overline{\mathbf{P}}$) the speed may be calculated by the following expression:

$$v_x = \frac{\dfrac{\partial P_x}{\partial t}}{\dfrac{\partial P_x}{\partial x}} \qquad \textbf{(Eq. 8)}$$

**Eq. 8** and the discussion above show that if the object velocity is expected to lie along a given direction, it is possible to determine the sole component of the velocity (i.e. the speed) by knowing the spatial derivative along the said direction and the time derivative of only one (which may be chosen) of the three components of the physical quantity $\overline{\mathbf{P}}$.

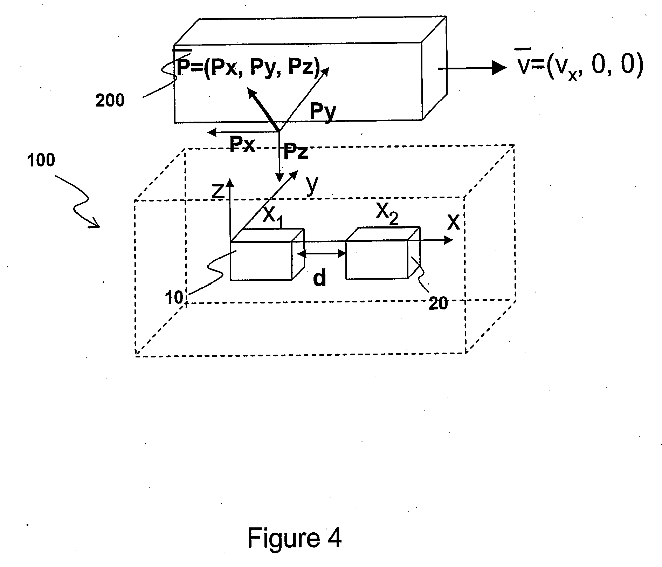

In this case, as shown in **Figure 4,** the sensing device **100** may comprise at least a pair of sensors **10, 20,** spaced apart by a known distance $d$, each one sensitive to at least one component of the physical quantity $\overline{\mathbf{P}}$ ('mono-axial sensor') and which are used to evaluate the time derivative and the spatial derivative of **Eq. 8**. The at least two sensors **10, 20** may be placed along the direction of the said one component of the velocity vector. A train running along the rail is another good example of an object whose velocity is expected to lie along a given fixed direction, while the velocity of a car running along a multi-lane road lies only approximately along the expected direction. In the latter case it's possible to estimate the error in the speed evaluation according to the present invention, in case the velocity forms an angle $\alpha$ with respect to the direction along with the sensors are placed. If the actual speed is $v$, for small angles the error in the speed evaluation is of the order of $\alpha^2 v$, with $\alpha$ expressed in radians.

It is possible to add redundancy to the measuring system 1 including the sensing device **100** of **Figure 4** by using at least two sensors **10, 20** which are bi-axial or tri-axial. In this case, it is possible to derive the velocity component $v_x$ using, respectively, two or three different formulas: **Eq. 8** and, respectively, one or both of the other two similar expressions which result by choosing, respectively, the y component or the z component of the quantity $\overline{\mathbf{P}}$. The two or three results for the speed may then be averaged, increasing the accuracy at the expenses, possibly, of a greater power consumption of the sensors with respect to the mono-axial case.

In general, the total number of sensors comprised within the sensing device **100** in order to measure the velocity of a moving object according to the present invention depends upon the number of the velocity components which the object velocity vector may have and, possibly, the degree of redundancy of the velocity measuring system **1**.

In the following, there are described exemplary implementations of the general concept of the present invention as expressed by **Eq. 1** and **3** with reference to the case of a single component velocity (**Eq. 7** and **8**). However, nothing in the present description should be interpreted as a limitation or restriction of the scope of the present invention to the mono-dimensional case. Further, it is possible for the skilled person to implement the other two cases (two and three velocity components) on the basis of the present description.

With reference again to **Fig. 4,** two sensors **10, 20** are placed at points $x_1$ and $x_2$ along the x-axis and spaced apart by a distance $d$ which is preferably shorter than the typical object length. It is assumed that the object may move substantially solely along the x-direction. For example, the sensors **10, 20** may be two magnetic sensors buried in a roadway and oriented substantially along the direction of movement of the vehicles (i.e. parallel to the lanes). It is also assumed that the sensors' measurement signals are in the form of a discrete time series of data representative of the physical quantity characterized by a sampling rate $f$ which is related to a sampling time step $\tau = 1/f$.

In one embodiment of the present invention it is possible to advantageously approximate the spatial derivative in **eq. 8** with the following relation:

$$\frac{\partial P_x}{\partial x} \cong \frac{P_x(x_1 + d) - P_x(x_1)}{d} \qquad \textbf{(Eq. 9)},$$

wherein $P_x(x_1 + d)$ is the physical quantity as measured by the sensor at $x_2 = x_1 + d$ and $P_x(x_1)$ is the same physical quantity as measured by the sensor at $x_1$.

Analogously, it is possible to approximate the time derivative of **eq. 8** with the following expression:

$$\frac{\partial P_x}{\partial t} \cong \frac{P_x(x_1, t + \tau) - P_x(x_1, t)}{\tau} \qquad \textbf{(Eq. 10)},$$

wherein $P_x(x_1, t)$ is the physical quantity as measured by the sensor at $x_1$ at the instant of time $t$ while $P_x(x_1, t+\tau)$ is the same physical quantity as measured by the same sensor at $x_1$ at a subsequent instant of time $t + \tau$. A discussion on preferred choices of the parameters $d$ and $\tau$, as well as on the criteria for their choice, will follow further below.

Alternative techniques may be used in order to evaluate the time and spatial derivatives used in the method and system of the present invention, such as for example by interpolating the measurement signals and calculating the mathematical derivative of the interpolating function. This latter approach may require larger computing resources.

By combining **Eq. 9** and **Eq. 10** into **Eq. 8** it is possible to derive a simple expression for the speed:

$$v \cong \frac{d}{\tau} \frac{P_x(x_1, t + \tau) - P_x(x_1, t)}{P_x(x_1, t) - P_x(x_2, t)} \qquad \textbf{(Eq. 11)}$$

**Eq. 11** shows that, according to the present invention, it is possible to compute the vehicle speed at a given instant of time t by measuring the time variation of one component of the physical quantity at a given sensor and the spatial variation of the same component of the physical quantity between the two sensors. Indeed, the present invention allows the evaluation of the speed by using only three measurement data from the two sensors **10, 20,** of which two successive data are from the first sensor and one datum is from the other. This is particularly advantageous in comparison to method of measuring the speed based on correlation function, which need to process two whole time series of data.

In order to improve the accuracy of the algorithm of **Eq. 11** with respect to the noise which affects the sensors measurements, it is advantageous to consider a sort of spatial averaging of the time variation and a sort of time averaging of the spatial variation, according to the following:

$$v \cong \frac{d}{\tau} \frac{P_x(x_1, t + \tau) - P_x(x_1, t) + P_x(x_2, t + \tau) - P_x(x_2, t)}{P_x(x_1, t + \tau) - P_x(x_2, t + \tau) + P_x(x_1, t) - P_x(x_2, t)} \qquad \textbf{(Eq. 12)}.$$

In general, 'a spatial averaging of a time variation' means that a time variation (i.e. a difference between two consecutive data of the discrete time series of data of one sensor) is computed at various (e.g. two) points in space (i.e. they are measured for the various sensors **10, 20,** and possibly **30** and **40**), and then averaged.

A time averaging of a spatial variation', means that the spatial variation (i.e. a difference of two substantially contemporary data taken from two discrete time series of data of two sensors) is measured for various (e.g. two) instants of time and then averaged.

This solution allows a good improvement of the robustness of the algorithms of the present invention to the sensor noise(s) without substantially increasing the measurements requirements, in that **Eq. 12** comprises only one additional measurement with respect to **Eq.11** which comprises three measurements.

Typically, the sensor response is a voltage that is related to the value of the measured physical quantity. Typically, the sensor response is linear in character:

$$V(t) = kP(t) + V_0 \qquad \textbf{(Eq. 13)},$$

wherein V(t) is the voltage response, P(t) is the generic physical quantity to be measured (e.g. one component of the quantity $\overline{P}$) and k and $V_0$ are called the 'gain' and the 'voltage offset' (i.e. the zero-field response), respectively. The measured physical quantities in **Eq. 9, 10, 11** and **12** will be related to the sensor voltage responses by the following relations:

$$P_x(x_1, t+\tau) = \frac{V_1(t+\tau) - V_{01}}{k_1}$$

$$P_x(x_1, t) = \frac{V_1(t) - V_{01}}{k_1}$$

$$P_x(x_2, t+\tau) = \frac{V_2(t+\tau) - V_{02}}{k_2} \qquad \textbf{(Eq. 14)}$$

$$P_x(x_2, t) = \frac{V_2(t) - V_{02}}{k_2}$$

Inserting Eq. 14 into Eq.12 (similarly for Eq. 11) one gets:

$$v \cong \frac{d}{\tau} \cdot \frac{V_1(t+\tau) - V_1(t) + \frac{\kappa_1}{\kappa_2}\left[V_2(t+\tau) - V_2(t)\right]}{V_1(t) + V_1(t+\tau) - 2V_{01} - \frac{\kappa_1}{\kappa_2}\left[V_2(t) + V_2(t+\tau) - 2V_{02}\right]} \qquad \textbf{(Eq. 15)}$$

In order to compute the speed $v$, the gains ($k_1$ and $k_2$) and the offset voltages ($V_{01}$ and $V_{02}$) of the two sensors have to be known. Typically, two distinct sensors, even thought of identical type, have different gains $k$ and voltage offsets $V_0$. Moreover the parameters k *and* $V_0$ are subject to temperature drift and/or other changes due to environmental conditions. Usually, various procedures (called 'calibration') for acquiring the current values of the parameters $k$ and $V_0$ are embodied in many commercially available sensors. Once the current values of the gain and the voltage offset are determined, it is possible to estimate the value of the measured physical quantity. One of the drawbacks of any kind of calibration is that they are time and power consuming.

For example, magnetic field sensors of the kind of the commercially available magneto-resistive sensors HMC1001/1002 or HMC 1021/1022 made by Honeywell are provided with built-in functionalities apt to determine the gain and the offset. For example, the 'offset strap' calibration procedure provides a way to check the current value of the gain $k$, by applying to the sensor a known (even thought subject to an error) magnetic field $\Delta P$ and evaluating the gain according to the formula:

$$k = \frac{V_2 - V_1}{\Delta P} \qquad \textbf{(Eq. 16)},$$

wherein $V_2$ is the sensor voltage reading when the field $\Delta P$ is applied and $V_1$ is the sensor reading without the field $\Delta P$ being applied (this calibration needs to be performed under steady state condition of the background magnetic field).

Another calibration procedure present in the Honeywell sensors above and which may possibly be useful for the implementation of the present invention is the 'set/reset' procedure, which is apt to determine the voltage offset $V_0$. It is based on a pair of current pulses, the set and the reset pulse, which are apt to set the gain of the sensor at the same value but with opposite sign. After the set pulse, the sensor reading is $V^{set} = kP + V_0$ and after the reset pulse the reading is $V^{reset} = -kP + V_0$, where $P$ is the same magnetic field. Taking the sum or the difference between the two readings allows obtaining the following expressions:

$$V^{\text{set}} - V^{\text{reset}} = 2kP \quad \text{(Eq. 17)}$$

$$V^{\text{set}} + V^{\text{reset}} = 2V_0 \quad \text{(Eq. 18)}$$

Accordingly, the speed in **Eq. 15** above may be evaluated by measuring the gains ($k_1$ and $k_2$) using **Eq. 16** and the offset voltages ($V_{01}$ and $V_{02}$) by using **Eq. 18** for both the sensors.

In the particular case wherein the at least two sensors **10, 20** are provided with a calibration procedure of the kind of the set/reset procedure of the Honeywell sensor above described, it is possible to use, in order to implement the present invention, the following method:

- during the passage of the moving object 200 (or at any time before it) a "set" pulse is done in both sensors;
- after a small time interval much lower than $\tau$ during which the transient is substantially finished, the measures $V_1^{\text{set}}$ ($t$) and $V_2^{\text{set}}$ ($t$) are taken at the time $t$;
- after a small time interval much lower than $\tau$ (needed for acquiring the two measures above) a "reset" pulse is done in both sensors;
- after a small time interval much lower than $\tau$ during which the transient is substantially finished, the measures $V_1^{\text{reset}}$ ($t$) and $V_2^{\text{reset}}(t)$ are taken at the time $t$ incremented by a small time interval $\varepsilon$ much lower than $\tau$;
- at the time $t + \tau$ a "set" pulse is done in both sensors
- after a small time interval much lower than $\tau$ during which the transient is substantially finished, the measures $V_1^{\text{set}}$ ($t +\tau$) and $V_2^{\text{set}}$ ($t + \tau$) are taken at the time $t+\tau$,
- after a small time interval much lower than $\tau$ (needed for acquiring the latter two measures above) a "reset" pulse is done in both sensors;
- after a small time interval much lower than $\tau$ during which the transient is substantially finished, the measures $V_1^{\text{reset}}$ ($t+\tau$) and $V_2^{\text{reset}}(t+\tau$) are taken at the time $t+\tau$ incremented by a small time interval $\varepsilon'$ much lower than $\tau$.

Using **Eq.17, Eq.12** becomes:

$$v \cong \frac{\dfrac{2d}{\tau}\left\{V_1(t+\tau) - V_1(t) + \dfrac{\kappa_1}{\kappa_2}\left[V_2(t+\tau) - V_2(t)\right]\right\}}{\left[V_1^{\text{set}}(t) - V_1^{\text{reset}}(t) + V_1^{\text{set}}(t+\tau) - V_1^{\text{reset}}(t+\tau)\right] - \dfrac{\kappa_1}{\kappa_2}\left[V_2^{\text{set}}(t) - V_2^{\text{reset}}(t) + V_2^{\text{set}}(t+\tau) - V_2^{\text{reset}}(t+\tau)\right]}$$

$$\text{(Eq. 19),}$$

wherein the $V_{1,2}$ in the numerator could be either all set or all reset measurements and it is understood that the reset measurements are taken at a point in time incremented by a small time interval $\varepsilon$ or $\varepsilon'$ with respect to the corresponding set measurement.

In one embodiment of the present invention, the ratio $\kappa_1 / \kappa_2$ in **Eq. 15** and **19** is given an approximate value of 1.

In another embodiment, an estimation of the actual current value of the ratio $\kappa_1 / \kappa_2$ is done, for example by performing the offset strap procedure (**Eq. 16**) for both the sensors. Alternatively, it is possible to advantageously use the set/reset approach for both the sensors at a same instant of time $t'$ wherein the magnetic field seen by the two sensors is the same. A possible implementation is to choose $t'$ when no object is passing close to the sensors so that the measured field at the two sensors is probably the same. Using **Eq. 17** it derives that:

$$\frac{\kappa_1}{\kappa_2} = \frac{V_1^{\text{set}}(t') - V_1^{\text{reset}}(t')}{V_2^{\text{set}}(t') - V_2^{\text{reset}}(t')} \quad \text{(Eq. 20).}$$

This set/reset procedure is performed every time that the ratio $\kappa_1 / \kappa_2$ in **Eq. 15** or **19** and/or the off set voltages $V_{01}$ and $V_{02}$ in **Eq. 15** need to be updated.

An alternative embodiment of the present invention allows avoiding any calibration procedure. This is possible by a suitable combination of a set of measurements performed at different instants, closely spaced in time (with respect to the typical ratio between the speed of the object and the spacing between the two sensors).

Using **Eq. 11** at three different instants of time, $t_1$, $t_2$, $t_3$, with $t_1 < t_2 < t_3$ and $t_2 - t_1 \cong t_3 - t_2 << d/v$, it is possible to write three independent expressions for the velocity:

$$\begin{cases} v \cong \dfrac{d}{\tau}\dfrac{P_x(x_1,t_3+\tau)-P_x(x_1,t_3)}{P_x(x_1,t_3)-P_x(x_2,t_3)} \\[4mm] v \cong \dfrac{d}{\tau}\dfrac{P_x(x_1,t_2+\tau)-P_x(x_1,t_2)}{P_x(x_1,t_2)-P_x(x_2,t_2)} \\[4mm] v \cong \dfrac{d}{\tau}\dfrac{P_x(x_1,t_1+\tau)-P_x(x_1,t_1)}{P_x(x_1,t_1)-P_x(x_2,t_1)} \end{cases} \quad \textbf{(Eq. 20).}$$

It is possible to show that the previous equations, expressed in terms of voltage outputs and offset and gain via **Eq. 14**, are a system of three equations in three unknown $\dfrac{1}{k_2}v$, $\dfrac{k_1}{k_2}v$ and $v$). It can be shown that the system (non-linear) is solvable for $v$, and the solution for the velocity, if one chooses equally spaced instant of time, $t_1 = t$, $t_2 = t_1 + \tau$ and $t_3 = t_2 + \tau = t_1 + 2\tau$, may be expressed only in terms of measured quantities:

$$v \cong \frac{d}{\tau}\frac{V_{10}(V_{22}-V_{21})+V_{11}(V_{20}+V_{21}-2V_{22})+V_{12}(V_{21}+V_{22}-2V_{20})+V_{13}(V_{20}-V_{21})}{V_{10}(V_{21}-V_{22})+V_{11}(V_{22}-V_{20})+V_{12}(V_{20}-V_{21})} \quad \textbf{(Eq. 21),}$$

wherein:
$V_{1i} = V_1(t + i\tau)$ and $i \in \{0,1,2,3\}$
$V_{2i} = V_2(t + i\tau)$ and $1 \in \{0,1,2\}$

It is thus possible to measure the velocity in terms only of the voltage outputs read by the at least two magnetic sensors at three different instants of time.

The Applicant has found that in case other sources of variation or sources of the physical quantity $\overline{P}$ are present besides the object under measurement **200**, they may affect the calculations performed according to the equations given above.

In case additional contributions to the quantity $\overline{P}$ are present, **Eq. 13** (the response of a sensor) may be rewritten in a more general form as:

$$V(t) = kP(t) + V_0 = k(P'(t) + P_{BASE} + P_{sp}) + V_0 \quad \textbf{(Eq. 13'),}$$

wherein P'(t) is the (time-variable) contribution to the physical quantity $P(t)$ given solely by the passage of the moving object **200**, $P_{BASE}$ is the background or 'baseline' physical quantity, i.e. the contribution given by sources of variations of $P$ or sources of $P$ which are far enough from the sensing device **100** so that each sensor **10, 20** (and possibly **30** and **40**) measures substantially an identical contribution $P_{BASE}$, and $P_{sp}$ is the 'spurious' contribution, i.e. that contribution which varies on a spatial scale comparable to the distance between a pair of sensors. This is the case, for example, of sources which are close enough to a pair of sensors so that each sensor of the pair will measure a different value of the physical quantity involved. This phenomenon results in spurious spatial variations while, in the typical case of steady spurious terms, the time variations will not be affected by it.

In absence of the spurious term ($P_{sp}=0$) or when it is negligible, the equations given above (such as for example **Eq. 9, 11, 12, 15, 19, 21** and so on) equally holds in case the physical quantity entering therein is regarded as solely the contribution $P'(t)$ and in case it is regarded as the contribution $P'(t)$ plus the baseline contribution $P_{BASE}$. In fact, the above equations are based on a difference between two contemporary or substantially contemporary measures of two distinct sensors and the term $P_{BASE}$ cancels being identical for the two sensors. This is the case of, for example, the earth background magnetic field when the measured physical quantity $\overline{P}$ is the magnetic field. The earth magnetic field sensed by the sensors could be considered the same all over the sensing device **100** because the sensor spacing is smaller than the typical length over with the earth magnetic field changes. The same is true also for time varying sources of variation, provided that they are sufficiently far.

On the other hand, the Applicant has discovered, during the experiments associated to the present invention, that if the sensing device **100** was placed near a source of variation of the sensed quantity, the results were inaccurate. For example, this happened in case the sensing device **100** including magnetic sensors **10, 20** was placed nearby a large iron body, such as a pipe.

This effect is believed to be due to the spurious contribution by the nearby source and it may be advantageously taken into account in the invention implementation in order to reduce errors in the object speed evaluation. Accordingly **Eq. 12** (similarly for **Eq.11**) is advantageously modified as follows:

$$v \cong \frac{d}{\tau} \frac{P_x(x_1,t+\tau)-P_x(x_1,t)+P_x(x_2,t+\tau)-P_x(x_2,t)}{P_x(x_2,t+\tau)-P_x(x_1,t+\tau)+P_x(x_2,t)-P_x(x_1,t)-2\Delta P_{sp}} \qquad \textbf{(Eq 22),}$$

wherein $P_x$ is the total quantity as measured by the sensors and $\Delta P_{sp}$ is the spurious variation of the physical quantity due to the unwanted sources: $\Delta P_{sp} = P_{sp}(x_2)\text{-}P_{sp}(x_1)$ and it has been assumed that the spurious contribution is time-independent. Now the denominator comprises only the terms $P'$ due solely to the passage of the moving body **200** (see the discussion above for the baseline contribution).

Analogously, **Eq.15** may be corrected as follows:

$$v \cong \frac{d}{\tau} \frac{V_1(t+\tau)-V_1(t)+\dfrac{\kappa_1}{\kappa_2}\left[V_2(t+\tau)-V_2(t)\right]}{V_1(t+\tau)+V_1(t)-2V_{01}-\dfrac{\kappa_1}{\kappa_2}\left[V_2(t+\tau)+V_2(t)-2V_{02}\right]-2\kappa_1\Delta P_{sp}} \qquad \textbf{(Eq. 23).}$$

In the same way, starting from **Eq. 19** it is possible to derive an expression similar to **Eq.19** itself and including at the denominator the correction term $-2k_1\Delta P_{sp}$.

In order to evaluate the above expressions including the spurious term, a procedure for spurious variation evaluation is necessary, for example by measuring a baseline signal $\overline{V}$ of the sensors defined by:

$$\overline{V}_1 = k_1\left[P_{BASE} + P_{sp1}\right]+V_{01}$$
$$\overline{V}_2 = k_2\left[P_{BASE} + P_{sp2}\right]+V_{02} \qquad \textbf{(Eq. 24),}$$

which may be evaluated from the reading of the sensors when no objects under measurement are present near the sensors (baseline condition). In order to evaluate the spurious variation, it is necessary to evaluate the sensors' parameters in **Eq. 24** according to known technique (see, e.g., **Eqs. 16-18**).

An alternative approach according to the present invention may eliminate the need for evaluating the spurious variations. It is based on the baselines of the sensor signals $\overline{V}_1$ and $\overline{V}_2$. By subtracting the baseline signals from the whole sensor signals, it is possible to get the contribution to the measured field P due to the moving object (see **Eq. 13'**):

$$V - \overline{V}_1 = k_1\left[P_1'(t)\right]$$

$$V - \overline{V_2} = k_2 \left[ P_2{'}(t) \right]$$

Accordingly, **Eq. 23**, using **Eq. 13'**, may be rewritten as follows:

$$v \cong \frac{d}{\tau} \frac{V_1(t+\tau) - V_1(t) + \dfrac{\kappa_1}{\kappa_2}\left[ V_2(t+\tau) - V_2(t) \right]}{V_1(t+\tau) + V_1(t) - 2\overline{V}_1 - \dfrac{\kappa_1}{\kappa_2}\left[ V_2(t+\tau) + V_2(t) - 2\overline{V}_2 \right]} \qquad \textbf{(Eq. 25).}$$

In order to evaluate the expression of **Eq. 25,** it is enough to evaluate the baseline signals and the ratio $\kappa_1/\kappa_2$.

In one embodiment of the present invention, the ratio $\kappa_1/\kappa_2$ in **Eq. 25** is given an approximate value of 1.

In another embodiment, an estimation of the actual current value of the ratio $\kappa_1/\kappa_2$ is done, for example by performing the offset strap procedure **(Eq. 16)** for both the sensors.

The Applicant has noted that in case the spurious variations affect the velocity measurement, it is preferred to use the implementation of the present invention according to **Eq. 25**.

It is noted that the method above (**Eq. 24** and **25**) may be used also in absence or in negligible presence of any spurious terms and in this case the evaluation of the baseline signal (which represents the offset voltage plus the voltage due to the background field) takes advantageously the place of the evaluation of the offset voltage.

In the following, simulated results of exemplary realizations of the present invention are described.

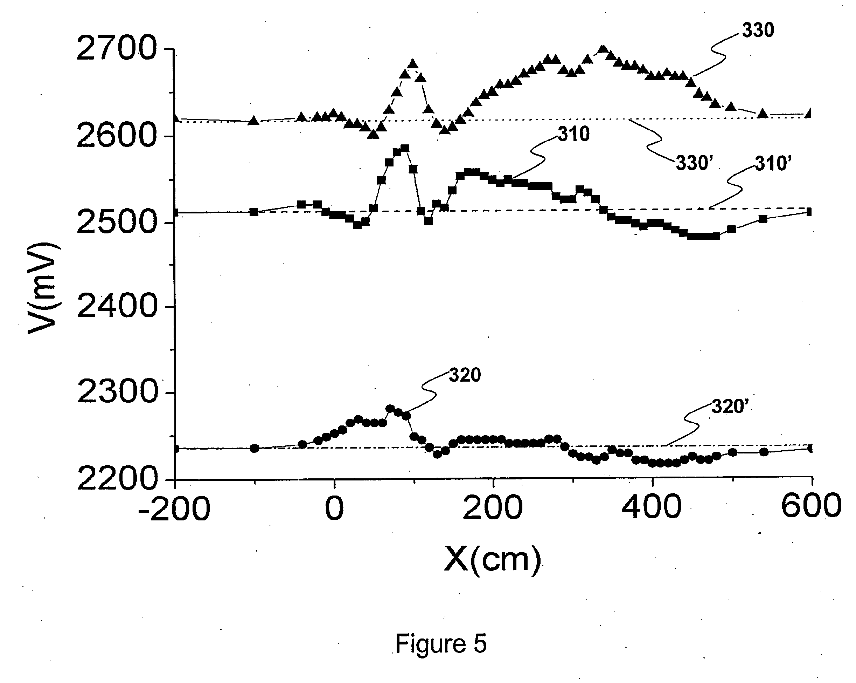

**Fig. 5** shows the static magnetic 'signatures' of a particular car model (Citroën XM). A bi-axial Honeywell magnetic sensor model HMC1002 placed at the road level below the car has been used with a suitable respective orientation for each of the three curves of **Fig. 5**. In case the sensor is buried below the asphalt of a road, no or negligible modification of the curves shown in **Fig. 5** occurs. The horizontal axis represents the spatial distance from one end of the car. The vertical axis represents the respective readings (Voltage) of the sensor, which senses the Earth magnetic field distortion by the car. Curve **310** is the sensor reading associated to the x-component (oriented along the car length) of the magnetic field, curve **320** is the reading associated to the y-component (oriented along the car width) and curve **330** is associated to the z-component (oriented along the car height). In **Fig. 5**, the respective baseline signals **310'**, **320'** and **330'** are also shown, which may be interpreted with a good approximation as the Earth baseline magnetic field.

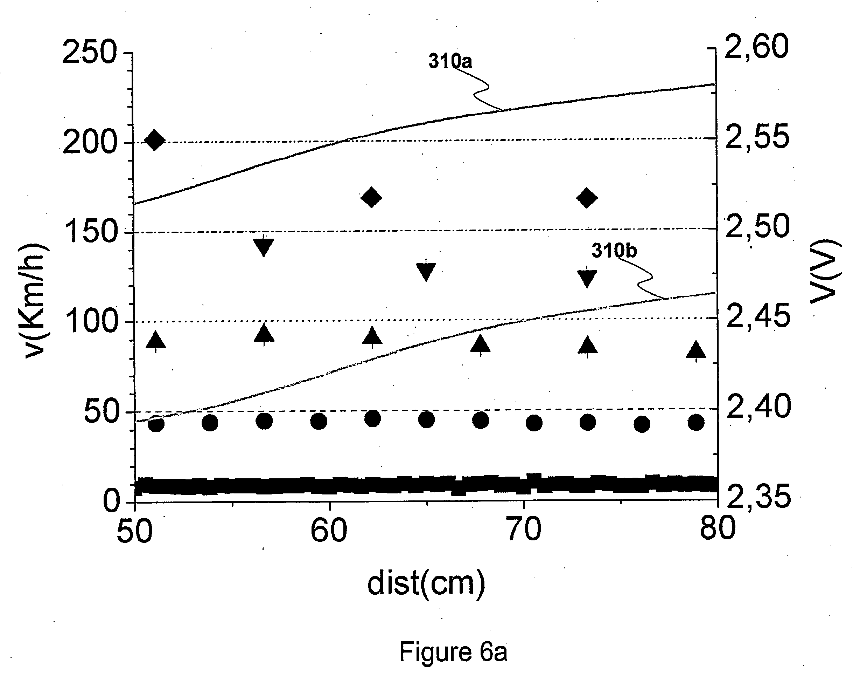

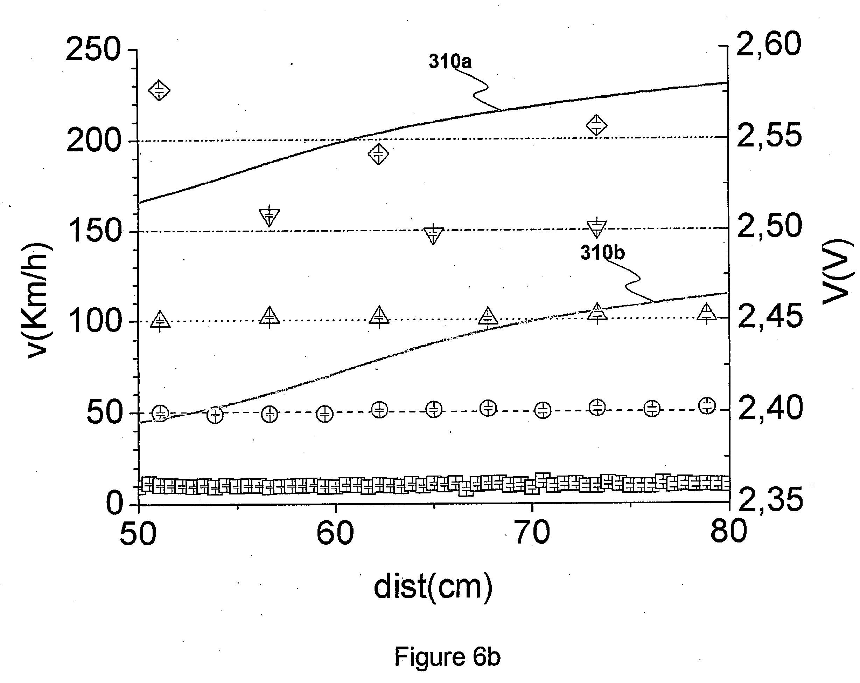

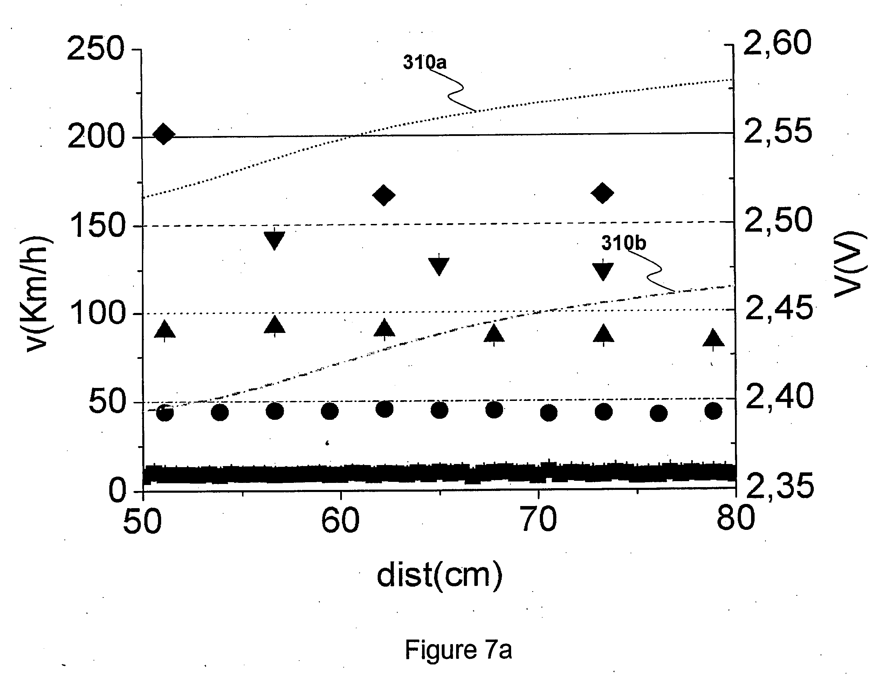

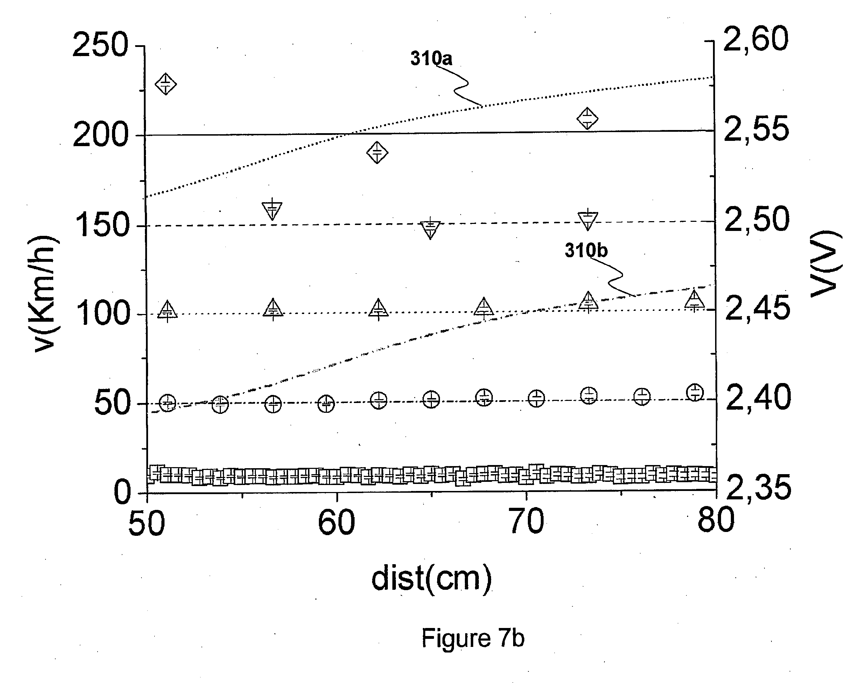

By spline-interpolating the magnetic curve obtained from the experimental curve **310** in **Fig. 5** between the positions at 50 cm and 80 cm, the Applicant has derived the expected time responses of two sensors having two different values of gains and two different values of offset voltages, in correspondence to the passage of a car moving with various different speeds. The two responses so obtained have been used to simulate the speed evaluation obtained when applying **Eq. 19** and **Eq. 25** in the case the two sensors (oriented along the direction of movement of the car) are spaced apart by a distance of 5 cm and the sampling rate is equal to 500 Hz ($\tau=2$ ms). Results are shown in **Figures 6** and **7**.

**Figures 6a** and **6b** show the sensor responses without noise (curves 310a and 310b) and the computed speed according to **Eq. 19** with the ratio $\kappa_1/\kappa_2$ equal to the approximated value of 1 (**Fig 6a** - filled symbols) and the exact value thereof (**Fig 6b** - empty symbols), when the car is assumed to pass at the speed of 10 km/h (squares), 50 km/h (circles), 100 km/h (triangle with a vertex up), 150 km/h (triangle with a vertex down) and 200 km/h (rhombus). The small time interval between set and reset measurements was taken equal to 0.1 ms. It has been assumed that no spurious contribution was present.

**Figures 7a and 7b** show the sensor responses without noise (curves 310a and 310b) and the computed speed according to **Eq. 25** with the ratio $\kappa_1/\kappa_2$ equal to the approximated value of 1 (**fig 7a**) and the exact value thereof (**fig 7b**), when the car is assumed to pass at the speed of 10 km/h (squares), 50 km/h (circles), 100 km/h (triangle with a vertex up), 150 km/h (triangle with a vertex down) and 200 km/h (diamonds). The baseline value has been computed as the average of many points of the curve **310** of **Fig. 5** in correspondence of absence of the object (curve **310'**). It has been assumed that no spurious contribution was present.

An accurate evaluation of the actual speed has been obtained for both algorithms.

The simulated results in **Fig. 6** and **7** were obtained by adding to the ideal sensor responses a simulated noise. Three kind of noise are added to the ideal sensor responses:

i) Ambient noise, i.e. the environmental noise due to the 50 Hz electro-magnetic pollution. It has the form: $V_A(t) = V_{0A}\sin(2\pi 50\, t + \phi)$ where $\phi$ is a pseudo-random generated phase between 0 and $2\pi$ and $V_{0A}$ has been set equal to 1 mV;

ii) Thermal noise, $V_T(t)$, i.e. a pseudo-random generated voltage value with a normal Gaussian distribution centered at zero voltage and having a $V_{0T}$ amplitude equal to 2.5 mV;

iii) Digitization noise, i.e., the finite resolution error introduced by the digitization of the signal in the electronics (i.e. in the ADC), assuming a 12 bit ADC converter with 5V amplitude, the maximum error being in this case $5V/2^{12}$.

The speed evaluation has been performed a large number of times randomly varying the above noise terms. The error bars overlapping the symbols in **Figs. 6** and **7** represent the standard deviations obtained from these simulation repetitions. The simulated standard deviation always remains below the value of about 5 km/h, which shows a high robustness to the above sources of noise.

In the method and system for measuring the velocity of a moving object according to the present invention, an important role is played by the value of the sensor distance(s) $d$ and of the sampling time step(s) $\tau$.

For the sake of clarity, the following discussion will be referred to the particular embodiment of the present invention wherein a speed measurement system for road vehicles uses a pair of magnetic sensors installed along the direction of the vehicle velocity. The choice of the sensor distance $d$ and of the sampling time step $\tau$ may be done according to the following considerations.

As far as the sensor distance $d$ is concerned, it is preferably shorter than the object size. Further, in order that **Eq. 9** approximates sufficiently well the space derivative, it is advantageous that the distance between sensors is smaller than the spatial length over which the measured physical quantity changes significantly in static conditions (see **Fig. 5**), so that the sensor responses belong to the same nearly linear portion of the static signal of the physical quantity. For example, the signal variations related to the high magnetic permeability parts (e.g. the engine block) of a car is in the tens of centimeters range or less. As shown in **Figure 5**, for distances between the object under measurement and the sensing device **100** sufficiently short, (typically from about 20 cm to about 1 m), the static signature measured by a sensor shows variations in correspondence to spatial scales of the same order of the magnetic permeability masses. Accordingly, it is preferred that the distance $d$ between the sensors is less than 15 cm, preferably less than 10 cm. On the other hand, in order not to degrade the signal to noise ratio of the signals measured, it is preferable that a minimum distance between the sensors is kept which depends upon the sensitivity of the sensors. Typically, it is preferred that the distance $d$ is greater than or equal to 1 cm, preferably 2 cm.

As far as the sampling time step $\tau$ is concerned, in order to 'see' the magnetic masses according to the discussion above, it is preferably chosen to be comparable to the ratio of the spatial scale of static magnetic variation and the speed of the car which may be assumed to vary between about 10 and 150 km/h.

Assuming a distance between the two sensors in a range from about 1 centimeter to about 15 centimeters, the above implies a time step $\tau$ of the order of 0.2 ms to 4 ms, corresponding to a sampling rate ranging from about 20 Hz to about 4 kHz. Preferably, the sensors distance ranges from about 2 centimeter to about 10 centimeters, the time increment from about 0.5 millisecond to about 40 milliseconds, and the corresponding sampling rate from about 30 Hz to about 2 kHz.

For all the algorithms, choosing a sensor distance of 5 cm, a sampling rate less than about 1 kHz, and preferably less than or equal to about 500 Hz (down to 200 Hz) has been verified to give satisfactory results.

The sampling time step $\tau$ and distance $d$ always enter the equations above in the form of a ratio. The Applicant has found that the preferred range for this ratio spans over the range of speeds one expects to measure. For example, if the application is in roadway vehicle speed measurement, the preferred range could be between about 1 and 150 Km/h. In fact, the other ratio entering **Eq. 11** and the corresponding ratios in the equations above would otherwise be largely different from unity, and this would turn into largely different numerator and denominator. This in turn would require a higher resolution and higher dynamic in the measurement.

As a comparative example, a method which evaluate the time delay between the two sensor measurement signals is affected by the relative error $\dfrac{\delta v}{v} = \dfrac{v}{d}\delta t$, wherein $\delta t$ is the error for the time delay evaluation, which is directly related to the sampling step $\tau$. For example, in order to have an error below about 10%, when the distance between the two sensors is 10 cm, it is necessary a sampling rate of at least 3 KHz in correspondence of a speed of 100 km/h.

Although the present invention has been disclosed and described by way of some embodiments, it is apparent to those skilled in the art that several modifications to the described embodiments, as well as other embodiments of the present invention are possible without departing from the scope thereof as defined in the appended claims.

**Claims**

**1.** A method for measuring the velocity of a moving object, the method comprising:

- acquiring at least two measurement signals via respectively at least two sensors **(10, 20)** spaced apart by a known distance, each of said at least two measurement signals being representative of a physical quantity which is measurable by the respective sensor and is subject to a change in correspondence to a passage of the moving object near the respective sensor;
- calculating at least one time derivative and at least one spatial derivative of said physical quantity from the at least two measurement signals; and
- calculating the velocity of the moving object as a function of said at least one time derivative and said at least one spatial derivative of said physical quantity,
wherein each of the at least two measurement signals is a discrete time series of data representative of the physical quantity and having a sampling time step; and, in the step of calculating the at least one time derivative and the at least one spatial derivative;
- the at least one time derivative is approximated by the ratio of the difference between two consecutive data of the discrete time series of data of one of the two sensors and the time step; and
- the at least one spatial derivative is approximated by the ratio of the difference of two substantially contemporary data taken from the two discrete time series of data of the at least two sensors and the known distance,
**characterized in that** the at least one time derivative is obtained by a spatial averaging of a time variation and the at least one spatial derivative is obtained by a time averaging of a spatial variation.

2. The method of claim 1 wherein, in the step of calculating the velocity of the moving object, the velocity is calculated by inversion of the equation $\overline{\dfrac{\partial \mathbf{P}}{\partial t}} = \overline{\overline{\dfrac{\partial \mathbf{P}}{\partial \mathbf{x}}}} \cdot \overline{\mathbf{v}}$, wherein $\overline{\mathbf{P}}$ is the physical quantity, $\overline{\dfrac{\partial \mathbf{P}}{\partial t}}$ includes said at least one time derivative, $\overline{\overline{\dfrac{\partial \mathbf{P}}{\partial \mathbf{x}}}}$ is the spatial gradient of the physical quantity $\overline{\mathbf{P}}$, including said at least one spatial derivative and $\overline{\mathbf{v}}$ is a vector representing the velocity.

3. The method of claim 1 wherein the at least two sensors **(10, 20)** lie along a direction substantially parallel to the velocity.

4. The method of claim 3 wherein the at least one time derivative is the time derivative of one component of the physical quantity and the at least one spatial derivative is the spatial derivative of said one component of the physical quantity along said direction and the velocity is obtained as the ratio of said time derivative and said spatial derivative.

5. The method of any of the above claims wherein said spatial averaging of a time variation means that a difference between two consecutive data of the discrete time series of data of one sensor is computed for the at least two sensors and then averaged and said time averaging of a spatial variation means that a difference of two substantially contemporary data taken from the two discrete time series of data of two sensors is measured for various instants of time and then averaged.

6. The method of claim 5 wherein said various instants of time are two..

7. The method of any of the preceding claims wherein the calculation of the at least one spatial derivative uses a pair of quasi-contemporarily measurements taken by each of the at least two sensors, the first measurement of said pair of measurements being **characterized by** a gain of the respective sensor substantially equal and opposite to the gain of the said respective sensor associated to the second measurement of said pair of measurements.

8. The method of any of the preceding claims wherein the calculation of the at least one spatial derivative uses baseline signals of the respective at least two sensors measured in absence of the moving object.

9. The method of any of the preceding claims wherein the at least two sensors are identical sensors.

10. The method of any of the preceding claims wherein the at least two sensors are magnetic sensors and the physical quantity is at least a component of a magnetic field.

11. A method for monitoring road traffic comprising a method for measuring the velocity of a vehicle according to any of the preceding claims, wherein the moving object is the vehicle.

**12.** A system **(1)** for measuring the velocity of a moving object **(200),** said system comprising a sensing device (100) comprising at least two sensors **(10, 20)** spaced apart by a known distance and each sensitive to a physical quantity subject to a change in correspondence to a passage of the moving object, a processing unit **(110)** and a connection **(120)** operatively connecting said sensing device and said processing unit **(110),** wherein:

- the sensing device **(100)** is configured for acquiring two measurement signals respectively from the at least two sensors **(10, 20),** each of said two measurement signals being representative of the physical quantity and being associated to said passage of the moving object near the respective sensor; and
- the processing unit (110) is configured for calculating at least one time derivative and at least one spatial derivative of said physical quantity from the at least two measurement signals and for calculating the velocity of the moving object as a function of said at least one time derivative and said at least one spatial derivative of said physical quantity,

wherein each of the at least two measurement signals is a discrete time series of data representative of the physical quantity and having a sampling time step and wherein the processing unit **(110)** is configured so that:

- the at least one time derivative is approximated by the ratio of the difference between two consecutive data of the discrete time series of data of one of the two sensors and the time step; and
- the at least one spatial derivative is approximated by the ratio of the difference of two substantially contemporary data taken from the two discrete time series of data of the at least two sensors and the known distance, **characterized in that** the at least one time derivative is a spatial averaging of a time variation and the at least one spatial derivative is a time averaging of a spatial variation.

**13.** The system of claim 12 wherein the processing unit **(110)** is configured for calculating the velocity by inversion of the equation $\dfrac{\overline{\partial \mathbf{P}}}{\partial t} = \dfrac{\overline{\overline{\partial \mathbf{P}}}}{\partial \mathbf{x}} \cdot \overline{\mathbf{v}}$ , wherein $\overline{P}$ is the physical quantity, $\dfrac{\partial \mathbf{P}}{\partial t}$ includes said at least one time derivative, $\dfrac{\overline{\overline{\partial \mathbf{P}}}}{\partial \mathbf{x}}$ is the spatial gradient of the physical quantity $\overline{\mathbf{P}},$ including said at least one spatial derivative and $\overline{\mathbf{v}}$ is a vector representing the velocity.

**14.** The system of claim 12 wherein the at least two sensors **(10, 20)** lie along a direction substantially parallel to the velocity.

**15.** The system of claim 14 wherein the at least one time derivative is the time derivative of one component of the physical quantity and the at least one spatial derivative is the spatial derivative of said one component of the physical quantity along said direction and the velocity is obtained as the ratio of said time derivative and said spatial derivative.

**16.** The system of any of the claims 12 to 15 wherein said spatial averaging of a time variation means that a difference between two consecutive data of the discrete time series of data of one sensor is computed for the at least two sensors and then averaged and said time averaging of a spatial variation means that a difference of two substantially contemporary data taken from the two discrete time series of data of two sensors is measured for various instants of time and then averaged.

**17.** The system of claim 16 wherein said various instants of time are two.

**18.** The system of any claims 12 to 17 wherein the at least two sensors are magnetic sensors and the physical quantity is at least a component of a magnetic field.

**19.** A traffic monitoring system including the system according to any of claims 12 to 18.

**Patentansprüche**

**1.** Verfahrenzum Messen der Geschwindigkeiteines bewegenden Objekts, das Verfahren umfassend:

- Erlangenmindesteszweier Messsignaleüber jeweils mindestens zwei Sensoren (10, 20), diedurcheine bekannte Distanz beabstandetsind, wobeijedesder zwei Messsignale repräsentativ für eine physikalische Größe ist, welchedurchden jeweiligen Sensormessbar ist und einer Änderung entsprechend einer Strecke des bewegenden Objekts nahe dem jeweiligen Sensor aus gesetzt ist;

- Berechnen mindestens einer zeitlichen Ableitung und mindestenseiner räumlichen Ableitungder physikalischen Größe der mindestens zwei Messsignale;und

- Berechnen der Geschwindigkeit des bewegenden Objekts als eine Funktion der mindestens einen zeitlichen Ableitung und der mindestens einen räumlichen Ableitung der physikalischen Größe,

wobei jedes der mindestens zwei Messsignale eine diskrete Zeitserie von Daten repräsentativ für die physikalische Größe ist und einen Abtastzeitschritt aufweist; und, in dem Schritt des Berechnensder mindestens einen zeitlichen Ableitungund der mindestens einen räumlichen Ableitung;

- die mindestens eine zeitliche Ableitung geschätzt wird durch das Verhältnis der Differenz zwischen zwei auf einan der folgenden Daten der diskreten Zeit serien von Daten von einem der zwei Sensoren und dem Zeitschritt; und

- die mindestens eine räumliche Ableitung geschätzt wird durch das verhältnis der Differenz von zwei im Wesentlichen zeit nahen Daten, die aus den zwei diskreten Zeit serien von Daten genommen werden von den mindestens zwei Sensoren und der bekannten Distanz,

**dadurch gekennzeichnet, dass** die mindestens eine zeitliche Ableitung erlangt wird durch ein räumliches Mitteln einer Zeit variation und die mindestens eine räumliche Ableitung erlangt wird durch eine Zeitmittelung einer räumliche Variation.

2. Verfahren nach Anspruch 1, wobei in dem Schritt des Berechnens der Geschwindigkeit des bewegten Objekts die Geschwindigkeit berechnet wird durch Invertierender Gleichung $\overline{\dfrac{\partial \mathbf{P}}{\partial t}} = \overline{\dfrac{\partial \mathbf{P}}{\partial \mathbf{x}}} \cdot \overline{\mathbf{v}}$ , wobei $\overline{\mathbf{P}}$ die physikalische Größe ist, $\overline{\dfrac{\partial \mathbf{P}}{\partial t}}$ die mindestens eine zeitliche Ableitung beinhaltet, $\overline{\dfrac{\partial \mathbf{P}}{\partial \mathbf{x}}}$ der räumliche Gradient der physikalischen Größe $\overline{\mathbf{P}}$ ist, beinhaltend die mindestens eine räumliche Ableitung und $\overline{\mathbf{v}}$ ein Vektor ist,der die Geschwindigkeitrepräsentiert.

3. Verfahren nach Anspruch 1, wobei die mindestens zwei Sensoren (10, 20) entlang einer Richtung im Wesentlichen parallel zu der Geschwindigkeit liegen.

4. Verfahren nach Anspruch 3 , wobei die mindestens eine zeitliche Ableitung die zeitliche Ableitungeiner Komponente der physikalischen Größe ist und die mindestens eine räumliche Ableitung die räumliche Ableitung der Komponente der physikalischen Größe entlang der Richtung ist und die Geschwindigkeiterlangt wird als das Verhältnis der zeitlichen Ableitungund der räumlichen Ableitung.

5. Verfahren nach einem der Vorgenannten Ansprüche, wobei das räumliche Mitteln einer Zeit variation heißt, dass eine Differenz zwischen zwei auf einander folgendenDaten der diskreten Zeit serie von Daten eines Sensors für die mindestens zwei Sensoren berechnet wird und dann gemittelt wird und die Zeitmittelung einer räumlichen Variation heißt, dass eine Differenz von zwei im Wesentlichen auf ein an der folgenden Datengenommen aus den zwei diskreten zeit serien von Daten von zwei Sensoren gemessen wird für verschiedene Instanzen von Zeit und dann gemittelt wird.

6. Verfahren nach Anspruch 5 , wobei die verschiedenen Instanzen von Zeit Zwei sind.

7. Verfahren nach einem der vorangegangenen Ansprüche, wobei die Berechnung der mindestens einen räumliche Ableitungein Paar von quasizeit nahen Messungen verwendet, die von jedem der mindestens zwei Sensoren genommen werden, wobei die erste Messung des Paars von Messungen **gekennzeichnet ist durch** eine Verstärkung des jeweiligen Sensors im Wesentlichen gleich oder entgegen gesetzt zu der Verstärkungdes jeweiligen Sensors, der mit der zweiten Messung des Paars von Messungen assoziiert ist.

8. Verfahren nach einem der Vorangegangenen Ansprüche, wobei die Berechnung der mindestens einen räumlichen Ableitung Basislinien signale der jeweiligen mindestens zwei Sensoren verwendet, diein Abwesenheitdes bewegenden Objekts gemessen wurden.

9. Verfahren nach einem der vorangegangenen Ansprüche, wobei die mindestens zwei Sensoren identische sensor sind.

10. Verfahren nacheinem der vorangegangenen Ansprüche, wobei die mindestens zwei Sensoren magnetische Sensoren sind und die physikalische Größe mindestens eine Komponente eines Magnetfelds ist.

11. Verfahren zum Über wachen von Straßenverkehr, umfassend ein Verfahren zum Messender Geschwindigkeit eines Fahrzeugs nach einem der vorangegangenen Ansprüche, wobei das bewegende Objekt das Fahrzeugist.

12. System(1) zum Messen der Geschwindigkeit eines bewegenden Objekts (200), wobei das System eine Erkennungseinrichtung (100) mit mindestens zwei Sensoren (10, 20), die um eine bekannte Distanz von ein an der be abstandet sind und jede sensitiv sind auf eine physikalische Größe, welche einer Änderung entsprechend einer Strecke des bewegenden Objekts unterworfen ist, eine Verarbeitungs einheit (110) und eine Verbindung (120), die die Erkennungs einrichtung und die Verarbeitungs einrichtung (110) operativ verbindet, umfasst, wobei:

   - die Erkennungs einrichtung (100) konfigurie r t ist zum Erlangen von jeweils zwei Messsignalen von den mindestens zwei Sensoren (10, 20), wobei jedes der zwei Messsignale repräsentativ ist für die physikalische Größe und assoziiert ist zu der Strecke des bewegten Objekts nahe dem jeweiligen Sensor; und
   - die Verarbeitungs einheit (110) konfiguriert ist zum Berechnen mindestens einer zeitlichen Ableitung und mindestens einer räumlichen Ableitung der physikalischen Größe aus den mindestens zwei Messsignalen und zum Berechnender Geschwindigkeit des bewegten Objekts als eine Funktionder mindestens einen Zeit ableitung und der mindestens einen räumlichen Ableitung der physikalischen Größe,
   wobei jeder der mindestens zwei Messsignale eine diskrete zeit serie von Daten ist, die repräsentativ sind für die physikalische Größe und einen Abtastzeitschritt aufweisen und wobei die Verarbeitungs ein heit (110) konfiguriertist, so dass:
   - die mindestens eine zeitliche Ableitung geschätzt wird durch das Verhältnis der Differenz zwischen zwei auf ein an der folgenden Daten der diskreten Zeit serien von Daten von einem der zwei Sensoren und dem Zeit schritt; und
   - die mindestens eine räumliche Ableitung geschätzt wird durch das Verhältnis der Differenz von zwei im Wesentlichen zeit nahen Daten, die aus den zwei diskreten Zeit serien von Daten genommen werden von den mindestens zwei Sensoren und der bekannten Distanz,
   **dadurch gekennzeichnet, dass** die mindestens eine zeitliche Ableitung erlangt wird durch ein räumliches Mitteln einer Zeit variation und die mindestens eine räumliche Ableitung erlangt wird durch eine Zeitmittelung einer räumliche Variation.

13. System nach Anspruch 12, wobei die Verarbeitungseinheit (110) konfiguriert ist zum Berechnen der Geschwindigkeit durch Invertieren der Gleichung $\overline{\dfrac{\partial \mathbf{P}}{\partial t}} = \overline{\dfrac{\partial \mathbf{P}}{\partial \mathbf{x}}} \cdot \overline{\mathbf{v}}$ , wobei $\overline{\mathbf{P}}$ die physikalische Größe ist, $\overline{\dfrac{\partial \mathbf{P}}{\partial t}}$ die mindestens eine zeitliche Ableitung beinhaltet, $\overline{\dfrac{\partial \mathbf{P}}{\partial \mathbf{x}}}$ derräumliche Gradient der physikalischen Größe $\overline{\mathbf{P}}$ ist, beinhaltend die mindestens eine räumliche ableitung und $\overline{\mathbf{v}}$ ein Vektor ist, der die Geschwindigkeit repräsentiert.

14. System nach Anspruch 12, wobei die mindestens zwei Sensoren (10, 20) entlangeiner Richtungim Wesentlichen parallel zu der Geschwindigkeit liegen.

15. System nach Anspruch 14, wobei die mindestens eine zeitliche Ableitung die zeitliche Ableitungeiner Komponente der physikalischen Größe ist und die mindestens eine räumliche Ableitung die räumliche Ableitung der Komponente der physikalischen Größe entlang der Richtung ist und die Geschwindigkeiterlangt wird als das Verhältnis der zeitlichen Ableitung und der räumlichen Ableitung.

16. System nach einem der Ansprüche 12 bis 15, wobei das räumliche Mitteln einer Zeit variation heißt, dass eine Differenz zwischen zwei auf ein anderfolgenden Daten der diskreten Zeitserie von Daten eines Sensors für die mindestens zwei Sensoren berechnet wird und dann gemittelt wird und die Zeitmittelung einer räumlichen Variationheißt, das eine Differenz von zwei im Wesentlichen auf einander folgenden Daten genommen aus den zwei diskreten Zeitserien von Daten von zwei Sensoren gemessen wird für verschiedene Instanzen von Zeit und dann gemittelt wird.

**17.** System nach Anspruch 16, wobei die verschiedenen In stanzen von Zeit Zwei sind.

**18.** System nach einem der Ansprüche 12 bis 17, wobei die mindestens zwei Sensoren magnetische Sensoren sind und die physikalische Größe mindestens eine Komponente eines Magnetfelds ist.

**19.** Verkehrsüber wachungssystem mit dem System nach einem der Ansprüche 12 bis 18.

**Revendications**

**1.** Procédé de mesure de la vitesse d'un objet en mouvement, le procédé comprenant :

- une acquisition d'au moins deux signaux de mesure via respectivement au moins deux capteurs (10, 20) espacés d'une distance connue, chacun desdits au moins deux signaux de mesure étant représentatif d'une quantité physique qui est mesurable par le capteur respectif et est sujet à un changement en relation avec un passage de l'objet en mouvement prêt du capteur respectif ;
- un calcul d'au moins une dérivée temporelle et d'au moins une dérivée spatiale de ladite quantité physique à partir desdits au moins deux signaux de mesure ; et
- un calcul de la vitesse de l'objet en mouvement en fonction de ladite au moins une dérivée temporelle et de ladite au moins une dérivée spatiale de ladite quantité physique, dans lequel chacun des au moins deux signaux de mesure est une série de données en temps discret représentative de la quantité physique et ayant un pas de temps d'échantillonnage ; et, dans l'étape de calcul de l'au moins une dérivée temporelle et de l'au moins une dérivée spatiale ;
- ladite au moins une dérivée spatiale est approximée par le rapport de la différence entre deux données consécutives de la série en temps discret de données d'un des deux capteurs et du pas de temps ; et
- ladite au moins une dérivée spatiale est approximée par le rapport de la différence de deux données sensiblement concomitantes prises dans les deux séries de données en temps discret des au moins deux capteurs et de la distance connue,
**caractérisé en ce que** l'au moins une dérivée temporelle est obtenue par une moyenne spatiale d'une variation temporelle et l'au moins une dérivée spatiale est obtenue par une moyenne temporelle d'une variation spatiale.

**2.** Procédé selon la revendication 1, dans lequel, dans l'étape de calcul de la vitesse de l'objet en mouvement, la vitesse est calculée par inversion de l'équation $\dfrac{\overline{\partial P}}{\partial t} = \dfrac{\overline{\overline{\partial P}}}{\partial x} \cdot \overline{v}$, dans lequel $\overline{P}$ est la quantité physique, $\dfrac{\overline{\partial P}}{\partial t}$ comprend ladite au moins une dérivée spatiale, $\dfrac{\overline{\overline{\partial P}}}{\partial x}$ est le gradient spatial de la quantité physique $\overline{P}$, comprenant ladite au moins une dérivée spatiale et $\overline{v}$ est un vecteur représentant la vitesse.

**3.** Procédé selon la revendication 1 dans lequel les au moins deux capteurs (10, 20) se trouvent le long d'une direction sensiblement parallèle à la vitesse.

**4.** Procédé selon la revendication 3 dans lequel l'au moins une dérivée temporelle est la dérivée temporelle d'une composante de la quantité physique et l'au moins une dérivée spatiale est la dérivée spatiale de ladite une composante de la quantité physique le long de ladite direction et la vitesse est obtenue par le rapport de ladite dérivée temporelle et de ladite dérivée spatiale.

**5.** Procédé selon l'une quelconque des revendications précédentes dans lequel ladite moyenne spatiale d'une variation temporelle signifie qu'une différence entre deux données consécutives de la série de données en temps discret d'un capteur est calculée pour les au moins deux capteurs et ensuite moyennée et ladite moyenne temporelle d'une variation spatiale signifie qu'une différence de deux données sensiblement concomitantes prises à partir des deux séries de données en temps discret des deux capteurs est mesurée pour plusieurs instants de temps puis moyennée.

**6.** Procédé selon la revendication 5 dans lequel lesdits plusieurs instants de temps sont au nombre de deux.

**7.** Procédé selon l'une quelconque des revendications précédentes dans lequel le calcul de l'au moins une dérivée spatiale utilise un couple de mesures quasi-concomitantes prises par chacun des au moins deux capteurs, la première mesure dudit couple de mesures étant **caractérisée par** un gain du capteur respectif sensiblement égal et opposé au gain dudit capteur respectif associé à la seconde mesure dudit couple de mesures.

8. Procédé selon l'une quelconque des revendications précédentes dans lequel le calcul de ladite au moins une dérivée spatiale utilise des signaux de base des respectifs au moins deux capteurs respectifs mesurés en l'absence de l'objet en déplacement.

9. Procédé selon l'une quelconque des revendications précédentes dans lequel les au moins deux capteurs sont des capteurs identiques.

10. Procédé selon l'une quelconque des revendications précédentes dans lequel les au moins deux capteurs sont des capteurs magnétiques et la quantité physique est au moins une composante d'un champ magnétique.

11. Procédé pour surveiller une circulation routière comprenant un procédé pour mesurer la vitesse d'un véhicule selon l'une quelconque des revendications précédentes, dans lequel l'objet en déplacement est le véhicule.

12. Système (1) pour mesurer la vitesse d'un objet en déplacement (200), ledit système comprenant un dispositif de capture (100) comprenant au moins deux capteurs (10, 20) espacés d'une distance connue et chacun sensible à une quantité physique sujette à un changement en relation avec un passage de l'objet en mouvement, une unité de traitement (110) et une connexion (120) reliant fonctionnellement ledit dispositif de capture et ladite unité de traitement (110), dans lequel :

   - le dispositif de capture (100) est configuré pour acquérir deux signaux de mesure provenant respectivement des aux moins deux capteurs (10, 20), chacun desdits signaux de mesure étant représentatif de la quantité physique et étant associé audit passage de l'objet en mouvement près du capteur respectif ; et
   - ladite unité de traitement (110) est configurée pour calculer au moins une dérivée temporelle et au moins une dérivée spatiale de ladite quantité physique à partir des au moins deux signaux de mesure et pour calculer la vitesse de l'objet en déplacement en fonction de ladite au moins une dérivée temporelle et de ladite au moins une dérivée spatiale de ladite quantité physique,
   dans lequel chacun des au moins deux signaux de mesure est une série de données en temps discret représentatives de la quantité physique et ayant un pas de temps d'échantillonnage et dans lequel l'unité de traitement (110) est configurée de sorte que:
   - ladite au moins une dérivée temporelle est approximée par le rapport de la différence entre deux données consécutives de la série de données en temps discret d'un des deux capteurs et du pas de temps ; et
   - ladite au moins une dérivée spatiale est approximée par le rapport de la différence de deux données sensiblement concomitantes prises à partir des deux séries de données en temps discret des au moins deux capteurs et de la distance connue,
   **caractérisé en ce qu'**au moins une dérivée temporelle est une moyenne spatiale d'une variation temporelle et l'au moins une dérivée spatiale est une moyenne temporelle d'une variation spatiale.

13. Système selon la revendication 12 dans lequel l'unité de traitement (110) est configurée pour calculer la vitesse par inversion de l'équation $\dfrac{\overline{\partial P}}{\partial t} = \dfrac{\overline{\partial P}}{\partial x} \cdot \overline{v},$, dans lequel $\overline{P}$ est la quantité physique, $\dfrac{\overline{\partial P}}{\partial t}$ comprend ladite au moins une dérivée spatiale, $\dfrac{\overline{\overline{\partial P}}}{\partial x}$ est le gradient spatial de la quantité physique $\overline{P}$, comprenant ladite au moins une dérivée spatiale et $\overline{v}$ est un vecteur représentant la vitesse.

14. Système selon la revendication 12 dans lequel les au moins deux capteurs (10, 20) se trouvent le long d'une direction sensiblement parallèle à la vitesse.

15. Système selon la revendication 14 dans lequel l'au moins une dérivée temporelle est la dérivée temporelle d'une composante de la quantité physique et l'au moins une dérivée spatiale est la dérivée spatiale de ladite une composante de la quantité physique le long de ladite direction et la vitesse est obtenue par le ratio de ladite dérivée temporelle et de ladite dérivée spatiale.

16. Système selon l'une quelconque des revendications 12 à 15 dans lequel ladite moyenne spatiale d'une variation temporelle signifie qu'une différence entre deux données consécutives de la série de données en temps discret d'un capteur est calculée pour les au moins deux capteurs et ensuite moyennée et ladite moyenne temporelle d'une variation spatiale signifie qu'une différence de deux données sensiblement concomitantes prises à partir des deux séries de données en temps discret des deux capteurs est mesurée pour plusieurs instants de temps puis moyennée.

17. Système selon la revendication 16 dans lequel lesdits plusieurs instants de temps sont au nombre de deux.

18. Système selon l'une quelconque des revendication 12 à 17 dans lequel les au moins deux capteurs sont des capteurs magnétiques et la quantité physique est au moins une composante d'un champ magnétique.

19. Système de surveillance de la circulation comprenant le système selon l'une quelconque des revendications 12 à 18.

Figure 1

$\bar{P}=(Px, Py, Pz)$

$\bar{v}=(v_x, v_y, v_z)$

200

160

160

Z

y

X

Px

Py

Pz

100

120

110

130

1

140

150

EP 1 910 848 B1

Figure 2

Figure 3

EP 1 910 848 B1

Figure 4

Figure 5

Figure 6a

Figure 6b

Figure 7a

Figure 7b

EP 1 910 848 B1

## REFERENCES CITED IN THE DESCRIPTION

**Patent documents cited in the description**

- WO 2004034065 A
- US 5331276 A
- US 6208268 B